(19) Europäisches Patentamt
European Patent Office
Office européen des brevets

(11) **EP 4 682 277 A1**

(12) **EUROPEAN PATENT APPLICATION**
published in accordance with Art. 153(4) EPC

(43) Date of publication:
**21.01.2026 Bulletin 2026/04**

(21) Application number: **24770336.6**

(22) Date of filing: **09.02.2024**

(51) International Patent Classification (IPC):
**C22C 21/00** (2006.01)   **C22C 21/02** (2006.01)
**C22C 21/06** (2006.01)   **C22F 1/00** (2006.01)
**C22F 1/04** (2006.01)   **H01M 50/503** (2021.01)
**H01M 50/522** (2021.01)

(52) Cooperative Patent Classification (CPC):
**C22C 21/00; C22C 21/02; C22C 21/06; C22F 1/00;
C22F 1/04; H01M 50/503; H01M 50/522**

(86) International application number:
**PCT/JP2024/004579**

(87) International publication number:
**WO 2024/190218 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2023 JP 2023039057**

(71) Applicant: **Yazaki Corporation
Tokyo 108-0075 (JP)**

(72) Inventor: **KOGUCHI, Yuta
Susono-shi, Shizuoka 410-1194 (JP)**

(74) Representative: **Grünecker Patent- und
Rechtsanwälte
PartG mbB
Leopoldstraße 4
80802 München (DE)**

(54) **ALUMINUM ALLOY BUS BAR**

(57) An aluminum alloy bus bar (1) includes a flat electric conductor (10) made of an aluminum alloy containing 0.35 to 0.8% by mass of magnesium and 0.3 to 0.7% by mass of silicon, with the remainder consisting of aluminum and unavoidable impurities. A plurality of Mg-Si system acicular particles (16) containing magnesium and silicon are dispersed in the aluminum alloy. An average length of the Mg-Si system acicular particles (16) is 67.1 nm to 378.4 nm, and number density of the Mg-Si system acicular particles (16) in the aluminum alloy is $4.5 \times 10^{20}/m^3$ to $6.8 \times 10^{21}/m^3$.

FIG. 1

EP 4 682 277 A1

**Description**

TECHNICAL FIELD

The present invention relates to an aluminum alloy bus bar.

BACKGROUND ART

Aluminum is a lightweight metal with good electrical conductivity, and is relatively inexpensive, so it is often used in bus bars, electric wires, electrodes, or the like. Industrial pure aluminum such as A1060 alloy and A1070 alloy, which are standardized by the Japanese Industrial Standards (JIS), and also A6101 alloy, are generally mentioned as aluminum alloys used as conductive members. A1060 alloy is guaranteed to have a conductivity of 61% IACS in JIS. Where the A1060 alloy is not strong enough, A6101 alloy, which is guaranteed to have a conductivity of 55% IACS, is often used.
The A6101 alloy is subjected to T6 treatment and has standard mechanical properties such as a tensile strength of 220 MPa, a yield stress of 195 MPa, and an elongation of 15% (1.6 mm thick, 50 mm gauge length). In addition, A6101 alloy has fine magnesium-silicon precipitates in an aluminum matrix and achieves high strength by the Orowan mechanism. However, when comparing A6101 alloy with industrial pure aluminum, the workability of A6101-T6 alloy in post-processing, such as pressing and bending, is rather low.
Patent Literature 1 discloses a method of manufacturing an aluminum alloy bus bar. Specifically, the method of manufacturing an aluminum alloy bus bar, in which a predetermined shape is obtained by performing edgewise bending on an aluminum alloy flat wire, is characterized in that, during edgewise bending, a machined part is heated to 100 °C or more, and 250 °C or less, held for no more than 5 minutes, and then edgewise bending is carried out. A material used for the aluminum alloy flat wire is an aluminum alloy material of T6 quality containing Mg: 0.3 to 0.9%, Si: 0.2 to 1.2%, Cu: 0.2% or less, Fe: 0.5% or less, and the remainder is a chemical component including Al and unavoidable impurities. Furthermore, a ratio A/B between the Vickers hardness A of a heated part and the Vickers hardness B of an unheated part is 0.8 or more. By this manufacturing method, the edgewise bending workability of the bend can be improved while the strength is prevented from being lowered.

CITATION LIST

PATENT LITERATURE

Patent Literature 1: Japanese Unexamined Patent Application Publication No. 2018-206663

SUMMARY OF INVENTION

However, in Patent Literature 1, when edgewise bending is performed, the quality of material of the machined part changes due to heating of the machined part, resulting in a strength difference between a heated part and an unheated part. In addition, there is a problem that manufacturing costs increase due to the required heating of the machined part.
The present invention has been made in view of such problems in the conventional technology. It is an object of the present invention to provide an aluminum alloy bus bar that is improved in bending workability and electrical connection stability by controlling the texture state of a material.
An aluminum alloy bus bar according to an embodiment of the present invention includes a flat electric conductor made of an aluminum alloy containing 0.35 to 0.8% by mass of magnesium and 0.3 to 0.7% by mass of silicon, with the remainder consisting of aluminum and unavoidable impurities. A plurality of Mg-Si system acicular particles containing magnesium and silicon are dispersed in the aluminum alloy. An average length of the Mg-Si system acicular particles is 67.1 nm to 378.4 nm, and number density of the Mg-Si system acicular particles in the aluminum alloy is $4.5 \times 10^{20}/m^3$ to $6.8 \times 10^{21}/m^3$.
According to the present invention, it is possible to provide an aluminum alloy bus bar that is improved in bending workability and electrical connection stability by controlling the texture state of the material.

BRIEF DESCRIPTION OF DRAWINGS

[FIG. 1] FIG. 1 is a perspective view schematically illustrating an example of an aluminum alloy bus bar according to the present embodiment.
[FIG. 2] FIG. 2 is a schematic cross-sectional view illustrating an example of a section of a flat electric conductor in an aluminum alloy bus bar.

[FIG. 3] FIG. 3 is a schematic view for explaining bending radius R in edgewise bend of a flat electric conductor.

[FIG. 4] FIG. 4 is a photograph illustrating a flat electric conductor with a grid marker before bending.

[FIG. 5] FIG. 5 is a photograph illustrating a flat electric conductor with a grid marker after edgewise bending.

[FIG. 6] FIG. 6 illustrates schematic views depicting cross-sectional shapes of a square edge and a round edge, and photographs illustrating the appearance of a flat electric conductor according to the present embodiment.

[FIG. 7] FIG. 7 is a photograph by a transmission electron microscope illustrating an observation result of a test sample of Example 1 at a magnification of 200,000.

[FIG. 8] FIG. 8 is a schematic view illustrating an example of a dispersed state of acicular particles in an aluminum alloy.

[FIG. 9] FIG. 9 illustrates an example of an observation result of a bend formed by edgewise bending at a magnification of 50, with no cracking or necking observed in the bend.

[FIG. 10] FIG. 10 illustrates an example of an observation result of a bend formed by edgewise bending at a magnification of 50, with cracks and necking observed in the bend.

[FIG. 11] FIG. 11 is a diagram for explaining an observed part of the bend in FIGS. 9 and 10.

[FIG. 12] FIG. 12 is a graph illustrating the relationship between an average length of precipitates and a yield stress in the test samples of Examples 1 to 12 and Comparative Examples 1 to 7.

[FIG. 13] FIG. 13 is a graph illustrating the relationship between a number density of precipitates and the yield stress in the test samples of Examples 1 to 12 and Comparative Examples 1 to 7.

DESCRIPTION OF EMBODIMENTS

Hereinafter, an aluminum alloy bus bar according to the present embodiment will be described in detail with reference to the drawings. The dimensional ratios in the drawings are exaggerated for the sake of explanation and may differ from the actual ratios.

Battery packs installed in electric vehicles, or the like tend to increase in size year by year in order to improve driving range. However, it is necessary to prevent enlargement of battery size in order to secure interior space inside a vehicle. Furthermore, wiring space for wires has been also limited. Therefore, it is desired to reduce height by using flat-plate bus bars instead of circular wires.

A bus bar is curved or twisted in various directions to form a routing path of the bus bar inside the battery pack so that the bus bar is routed in a limited space. When the bus bar is short, it is possible to shape the bus bar by punching and pressing. However, punching and pressing causes material loss, which is not desirable from the viewpoint of carbon neutrality, and leads to an increase in processing cost. In addition, when a long bus bar is made by punching and pressing, a large mold is required, which greatly increases the cost.

Furthermore, in recent years, the thickness of the bus bar has tended to increase because the allowable current of the bus bar needs to be increased due to the increase in the current of the battery pack. However, when the thickness of the bus bar is increased, machining by pressing becomes difficult. Therefore, it is desirable to form a routing path by bending, so that a material loss of a long bus bar decreases, and the machining cost is lowered.

When bending a bus bar, the smaller the bending radius (bending R) of the bend, the closer to a right-angle the path can be formed and the greater the degree of design freedom can be. However, as mentioned above, the A6101-T6 alloy has low bending workability, and has a large bending radius. Therefore, the bus bar made of the alloy has a long wiring distance and is not suitable for wiring in a narrow space.

Moreover, a rolled material is often used for a conventional bus bar. However, due to the shaping of a bus bar by slit processing, punching, and pressing, it is a concern that sharp corners may act as a stress concentration starting point.

Furthermore, in the automotive environment, the bus bar is required to have fastening reliability, vibration durability, and high temperature durability. In other words, the bus bar which is fastened by bolts is required to have a sufficient strength to ensure electrical connectivity and vibration durability. However, industrial pure aluminum has an insufficient strength to ensure electrical connectivity and vibration durability, so it is difficult to apply it to the bus bar. Therefore, the use of A6101 alloy as the aluminum alloy for the bus bar has been considered. However, this alloy has poor heat resistance, and it is feared that mechanical properties and other physical properties may change due to temperature changes in the automotive environment.

From this viewpoint, the aluminum alloy bus bar according to the present embodiment improves bending workability and electrical connection stability by optimizing the composition of the aluminum alloy, and controlling a microstructure to form fine acicular precipitates in an aluminum alloy structure.

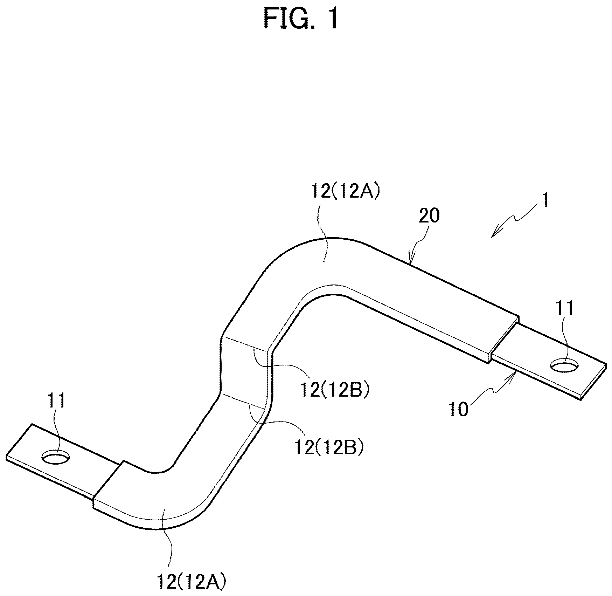

As illustrated in FIG. 1, an aluminum alloy bus bar 1 of the present embodiment has a long flat electric conductor 10 made of an aluminum alloy. A periphery of a central portion of the flat electric conductor 10 is covered with an insulator layer 20 having an electrical insulation property. The aluminum alloy bus bar 1 has a plurality of bends 12. The bends 12 include an edgewise bend 12A curved in a width direction of the flat electric conductor 10, and a flatwise bend 12B curved in a thickness direction of the flat electric conductor 10.

Holes 11, which are through-holes, are provided at both ends of the flat electric conductor 10 of the aluminum alloy bus bar 1, and can be fastened to other fastened members, for example, using a fastening member. Specifically, when a bolt and a nut are used as the fastening member, and terminals are used as the other fastened members, the flat electric conductor 10 and the terminals can be fastened and fixed by inserting a screw portion of the bolt into both the holes 11 of the flat electric conductor 10 and the holes of the terminals and then screwing a nut into the screw portion.

The material and thickness of the insulator layer 20 are not particularly limited as long as electrical insulation with respect to the flat electric conductor 10 can be secured. For example, vinyl chloride, heat-resistant vinyl chloride, cross-linked vinyl chloride, polyethylene, cross-linked polyethylene, foamed polyethylene, cross-linked foamed polyethylene, chlorinated polyethylene, polypropylene, polyamide (nylon), polyvinylidene fluoride, ethylene-tetrafluoroethylene copolymer, tetrafluoroethylenehexafluoropropylene copolymer, tetrafluoroethylene, perfluoroalkoxyalkane, natural rubber, chloroprene rubber, butyl rubber, ethylene-propylene rubber, chlorosulfonated polyethylene rubber, and silicone rubber can be used as the resin material forming the insulator layer 20. One of these materials may be used alone, or two or more of these materials may be used in combination.

The flat electric conductor 10 of the aluminum alloy bus bar 1 is made of an aluminum alloy containing 0.35 to 0.8% by mass of magnesium and 0.3 to 0.7% by mass of silicon, with the remainder consisting of aluminum and unavoidable impurities.

As a base material of the aluminum alloy, pure aluminum having a purity of 99.7% by mass or more is preferably used. That is, among aluminum ingots specified in the Japanese Industrial Standard JIS H2102 (Aluminum ingots for remelting), aluminum ingots having a purity of Al99.70 or more can be preferably used. Specifically, Al99.70, Al99.94, Al99.97, Al99.98, Al99.99, Al99.990, and Al99.995 having a purity of 99.7% by mass or more are named. In the present embodiment, not only expensive and high-purity aluminum ingots such as Al99.995, but also affordable aluminum ingots having a purity of 99.7% by mass or more can be used as the aluminum ingots.

Magnesium (Mg) is an element that can enhance the strength of the flat electric conductor 10 as an aluminum alloy plate while minimizing any decrease in conductivity. Magnesium is preferably contained in 0.35 to 0.8% by mass in the aluminum alloy. Silicon (Si) is an element that can improve the strength of the flat electric conductor 10 by solid solution strengthening and precipitation dispersion strengthening. Silicon is preferably contained in 0.3 to 0.7% by mass in the aluminum alloy. Iron may be contained in the aluminum alloy, but the content of iron is preferably 0.50% by mass or less.

The aluminum alloy may contain an extremely small amount of unavoidable impurities. Examples of unavoidable impurities that may be contained in aluminum alloys include nickel (Ni), rubidium (Rb), tin (Sn), vanadium (V), gallium (Ga), boron (B), sodium (Na), zirconium (Zr), manganese (Mn), lead (Pb), calcium (Ca), and the like. These impurities are unavoidably contained to the extent that they do not interfere with the effect of the present embodiment, and do not affect the characteristics of the aluminum alloy of the present embodiment. Elements previously contained in the aluminum ingots to be used are also included in the unavoidable impurities. The total amount of unavoidable impurities in the aluminum alloy is preferably 0.07% by mass or less, and more preferably 0.05% by mass or less.

In the aluminum alloy bus bar 1 of the present embodiment, the aluminum alloy forming the flat electric conductor 10 has a plurality of dispersed Mg-Si system acicular particles containing magnesium and silicon. In other words, the aluminum alloy has highly dispersed Mg-Si system acicular particles consisting of an intermetallic compound containing magnesium and silicon. The highly dispersed Mg-Si system acicular particles in the aluminum alloy increase the yield stress of the flat electric conductor 10, and therefore, even when the holes 11 are fastened by fastening members (for example, nuts and bolts), stress relaxation around the hole 11 can be suppressed. As a result, conductivity between the flat electric conductor 10 and the fastening member, and between the flat electric conductor 10 and other fastened members, can be enhanced. In addition, the highly dispersed Mg-Si system acicular particles increase the yield stress of the flat electric conductor 10 and maintain high bending workability. Therefore, even if the edgewise bend 12A and the flatwise bend 12B are formed in the aluminum alloy bus bar 1, the occurrence of cracking and necking (constriction) in the bending portion 12 can be suppressed.

More specifically, when the yield stress of the bus bar is insufficient, and the bus bar and other fastened members are fastened by bolts and nuts, the bolts and nuts recede into the bus bar due to stress relaxation, and the fastening force between the bolts and nuts decreases. As a result, loosening of the bolt and an increase in electrical resistance between the bus bar and the other fastened members occurs, and the electrical connection between the bus bar and the other fastened members becomes unstable. However, as in the present embodiment, the yield stress is increased by highly dispersing Mg-Si system acicular particles in the aluminum alloy forming the flat electric conductor 10. Therefore, the stress relaxation of the flat electric conductor 10 is suppressed, and the electrical connection between the flat electric conductor 10 and the other fastened members can be maintained well. Moreover, as will be described below, by making the number density of Mg-Si system acicular particles dispersed in the aluminum alloy equal to or less than a predetermined value, the bending workability of the flat electric conductor 10 can be enhanced, and the occurrence of cracking and necking in bends 12 of the flat electric conductor 10 can be suppressed.

As described above, the aluminum alloy forming the flat electric conductor 10 contains 0.35 to 0.8% by mass of magnesium and 0.3 to 0.7% by mass of silicon. This range of compositions will be described in more detail. The 6000 system (Al-Mg-Si system) aluminum alloy of the JIS standard is an age precipitation type alloy, and strength is expressed by magnesium and silicon forming a compound. The strength of the 6000 series aluminum alloy can be enhanced by increasing the amount of magnesium and silicon. Moreover, excess magnesium or silicon added from the Mg-Si system precipitates can be dissolved in the aluminum matrix to improve workability. However, as the amounts of magnesium and silicon are increased simultaneously, the amount of Mg-Si system precipitates produced is increased, and the bending workability is lowered. In order to avoid this, it is necessary to limit the amounts of magnesium and silicon to be added.

Here, the composition range of the A6101 alloy is specified in JIS H4000 (Aluminum and aluminum alloy sheets, strips and plates), and the amount of magnesium added is 0.35 to 0.80% by mass and the amount of silicon added is 0.30 to 0.70% by mass. The aluminum alloy forming the flat electric conductor 10 according to the present embodiment is examined within this composition range. As described above, when the amount of magnesium and silicon added is reduced, the yield stress decreases due to a reduced amount of Mg-Si system precipitates, and when the amount of magnesium and silicon added is excessively increased, the bending workability decreases. Therefore, it is desirable to control the composition within the above range in order to obtain the effect of the present embodiment.

An average length of the Mg-Si system acicular particles dispersed in the aluminum alloy forming the flat electric conductor 10 is preferably 67.1 nm to 378.4 nm, and more preferably 291.3 nm to 378.4 nm. When the average length of the Mg-Si system acicular particles is within this range, the stress relaxation of the flat electric conductor 10 can be suppressed, and the stability of the electrical connection with other fastened members can be improved. Moreover, it is possible to perform edgewise bending, flatwise bending, and twist bending while maintaining high bending workability of the flat electric conductor 10. Note that the average length of the Mg-Si system acicular particles can be obtained by observing a sample of aluminum alloy forming the flat electric conductor 10 with a transmission electron microscope and measuring the lengths of a plurality of acicular particles. In this specification, the length of the Mg-Si system acicular particles means the longest distance between two different points on the contour of the acicular particles when the aluminum alloy is observed with a microscope.

The aspect ratio and a diameter of the Mg-Si system acicular particles are not particularly limited, but the aspect ratio can be, for example, 4.4 to 68.2. The diameter of the Mg-Si system acicular particles is perpendicular to the longitudinal direction of the acicular particles and can be determined by observing them with a transmission electron microscope.

The number density of the Mg-Si system acicular particles in the aluminum alloy forming the flat electric conductor 10 is preferably $4.5\times10^{20}/m^3$ to $6.8\times10^{21}/m^3$, and more preferably $4.5\times10^{20}/m^3$ to $9.1\times10^{20}/m^3$. The yield stress increases when the Mg-Si system acicular particles are highly dispersed at $4.5\times10^{20}/m^3$ or more, so that the stress relaxation of the flat electric conductor 10 can be suppressed, and the electrical connection between the flat electric conductor 10 and other fastened members can be maintained well. Furthermore, when the Mg-Si system acicular particles are $6.8\times10^{21}/m^3$ or less, the degradation of the bending workability of the flat electric conductor 10 can be suppressed, and therefore, edgewise bending, flatwise bending, and twist bending can be performed.

The number density of Mg-Si system acicular particles in an aluminum alloy can be calculated in the following manner. First, an aluminum alloy sample is observed with a transmission electron microscope, and the number of acicular particles in a predetermined area is obtained to calculate the areal density (number/$m^{2)}$). Then, by multiplying the areal density by the thickness of the sample, the number density (number/$m^{3)}$) of the acicular particles can be calculated.

It is preferable that an allowable bending strain $\varepsilon$ of the flat electric conductor 10, which is expressed by Mathematical Formula 1 below, exceeds 0.27.

[Math. 1]

$$\varepsilon = \frac{1.48b}{2R_{min} + b}$$

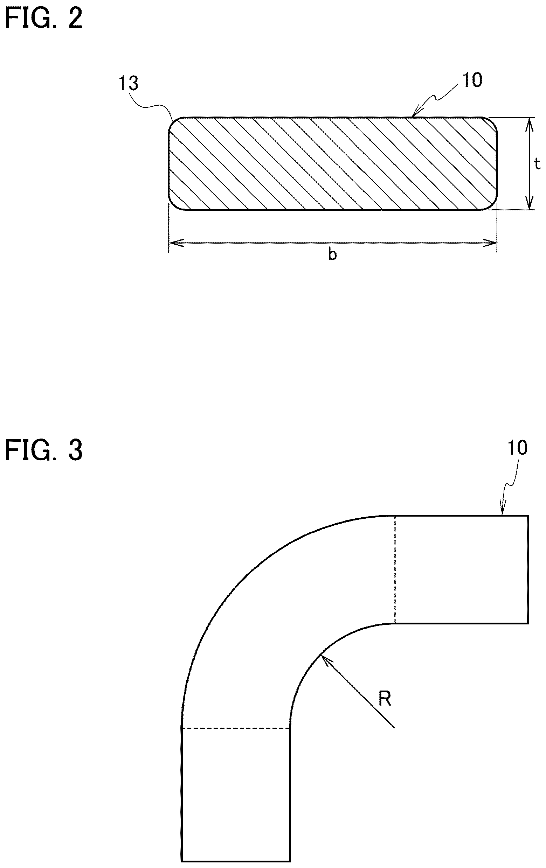

In Mathematical Formula 1, b is a plate width (mm) of the flat electric conductor 10, and $R_{min}$ is a minimum bending radius (mm) when the flat electric conductor 10 of the plate width is bent edgewise. Note that the plate width b of the flat electric conductor 10 is obtained when a cross section perpendicular to a longitudinal direction of the flat electric conductor 10 is observed, as illustrated in FIG. 2. $R_{min}$ is the minimum value of the radius R from a bending position to a center of a bend when the flat electric conductor 10 of the plate width is bent edgewise at room temperature, as illustrated in FIG. 3.

Mathematical Formula 1 considers the difference between a theoretical bending strain and a measured bending strain when the flat electric conductor 10 is bent edgewise. Here, "bending strain" refers to a strain applied to an outermost surface of an outer curved surface (outer R part) when the flat electric conductor 10 is bent edgewise. The theoretical bending strain $\varepsilon'$ can be obtained by Mathematical Formula 2 below.

[Math. 2]

$$\varepsilon' = \frac{b}{2R + b}$$

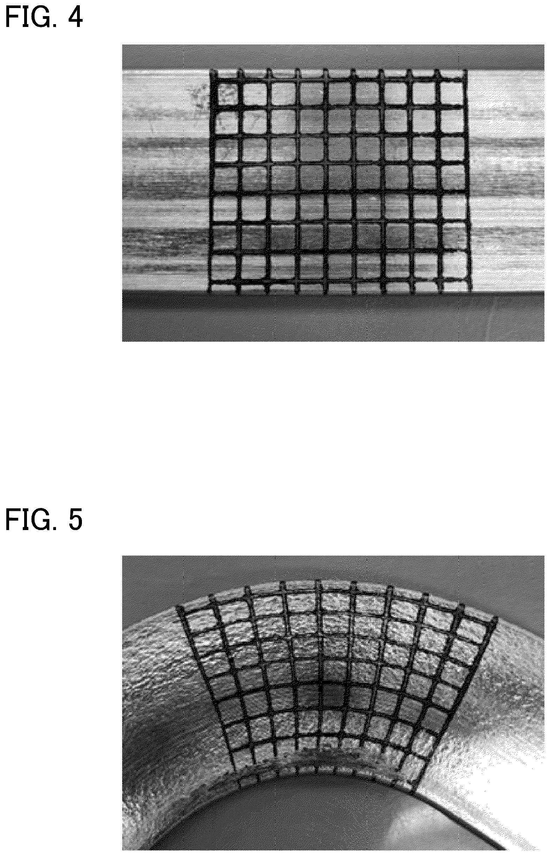

In Mathematical Formula 2, b is the plate width (mm) of the flat electric conductor 10, and R is the bending radius (mm) when the flat electric conductor 10 of this plate width is bent edgewise. As illustrated in FIGS. 4 and 5, the measured bending strain can be calculated from the amount of change in the lattice by edgewise bending of the flat electric conductor 10 marked with a lattice marker.

In the flat electric conductor 10, when the allowable bending strain ε expressed by Mathematical Formula 1 below exceeds 0.27, the bending workability of the flat electric conductor 10 is good. Therefore, even if the flat electric conductor 10 is bent edgewise, the occurrence of cracking and necking in the bend 12 can be suppressed. However, the allowable bending strain ε of the flat electric conductor made of, for example, A6101-T6 alloy is 0.27 or less because the strength is too high and the bending workability is poor.

The yield stress of the flat electric conductor 10 is preferably 55 to 201 MPa at room temperature. When the yield stress of the flat electric conductor 10 is 55 MPa or more, stress relaxation of the flat electric conductor 10 can be suppressed, and the electrical connection between the flat electric conductor 10 and other fastened members can be maintained well. Moreover, when the yield stress of the flat electric conductor 10 is 201 MPa or less, the bending workability of the flat electric conductor 10 is good, and the occurrence of cracking and necking of the bend 12 can be suppressed. The yield stress of the flat electric conductor 10 can be measured in accordance with JIS Z2241 (Metallic materials - Tensile testing - Method of test at room temperature).

The numerical range of the yield stress of the flat electric conductor 10 will be described in more detail. Bus bars routed in a battery pack of a vehicle are used to connect junction boxes (J/Bs), battery stacks, or the like, and possible connecting methods between these and the bus bars include welding, solid-phase bonding, bolting, and the like.

Here, when a connection by bolting is considered, pressure to restrain the bus bar is exerted on a flange (head) by an axial force of a bolt. The axial force of the bolt can be obtained by Mathematical Formula 3 below.

[Math. 3]

$$F = T/dK$$

In Mathematical Formula 3, F is an axial force (N) of the bolt, T is the fastening torque (N·m), d is the nominal diameter of a threaded area (m), and K is a torque coefficient. The value obtained by dividing the axial force F of the bolt by the area S ($mm^2$) of the bearing surface of the flange is the pressure exerted on the bearing surface of the flange. The area of the bearing surface is where the flange of a bolt is actually in contact with the bus bar. F/S (MPa) is a lower limit of the yield stress required to prevent the bus bar from receding.

In general, bolts such as M6 are often used to fasten the bus bar to other fastened members. For example, it is assumed that a flange diameter φ is 13 mm and a torque coefficient is 0.2. When the fastening torque is 5 to 10 (N/m), a bearing surface pressure of about 42 to 83 (MPa) is applied. The contact resistance varies depending on the materials and surface properties of the bus bar, the fastening torque is not constant, but considering the safety factor, or the like, it is preferable that the yield stress of the bus bar is at least 100 MPa or more. Although the A6101 alloy is specified by various standards such as JIS, ASTM, and EN, it is necessary to ensure the yield stress of at least 55 MPa or more, in the case of A6101-T64 specified in ASTM B317/B317M. Therefore, the yield stress of the flat electric conductor 10 according to the present embodiment is preferably 55 MPa or more. As illustrated in Examples 6, 10, and 12, which will be described below, the allowable bending strain tends to decrease slightly when the yield stress is less than 118 MPa. Therefore, the yield stress of the flat electric conductor 10 is more preferably 120 MPa or more.

Thus, the yield stress of the flat electric conductor 10 at room temperature is preferably 55 to 201 MPa, more preferably 100 to 201 MPa, and particularly preferably 120 to 201 MPa.

The aluminum alloy bus bar 1 of the present embodiment is a conductive member connected to a junction box (J/B), a battery stack, or the like, as described above, thus it is preferable that the conductivity of the aluminum alloy bus bar 1 be as high as possible. Therefore, the conductivity of the flat electric conductor 10 is preferably 55% IACS or more. The conductivity of the flat electric conductor 10 can be measured in accordance with JIS H0505 (Measuring methods for electrical resistivity and conductivity of non-ferrous materials).

For the flat electric conductor 10, an n value measured in accordance with JIS Z2241 (Metallic materials - Tensile testing - Method of test at room temperature) is preferably 0.07 or more, and more preferably 0.15 or more. The n value is one index for measuring the degree of work hardening of a metallic material, and the closer it is to 1, the greater the degree of work hardening. When the n value of the flat electric conductor 10 is 0.07 or more, the hardness of the bend 12 after bending to the hardness of the bend 12 before bending ([Hardness of the bend after bending] / [Hardness of the bend before bending]) exceeds 1, so that it is possible to control strength degradation of the bend 12. In other words, when the flat electric conductor 10 is subjected to bending, and the n value is 0.07 or more, the bend 12 is hardened by work hardening, and thus exhibits a high hardness value. Specifically, the hardness of the bend 12 after bending to the hardness of the bend 12 before bending exceeds 1.0 and is about 1.3. Therefore, when the n value of the flat electric conductor 10 is 0.07 or more, the strength degradation of the bend 12 can be suppressed.

As described above, a rolled material is often used for the conventional bus bar, and in this case, the shape of the bus bar is formed by slit processing, punching, and pressing. Therefore, the corners of the obtained bus bar have a sharp shape, and there is a concern that it may act as a starting point of stress concentration. Therefore, in the aluminum alloy bus bar 1 of the present embodiment, it is preferable that the flat electric conductor 10 has at least corners 13 of the bend 12 chamfered. Moreover, it is preferable that the corners 13 overall in the longitudinal direction of the flat electric conductor 10 are chamfered.

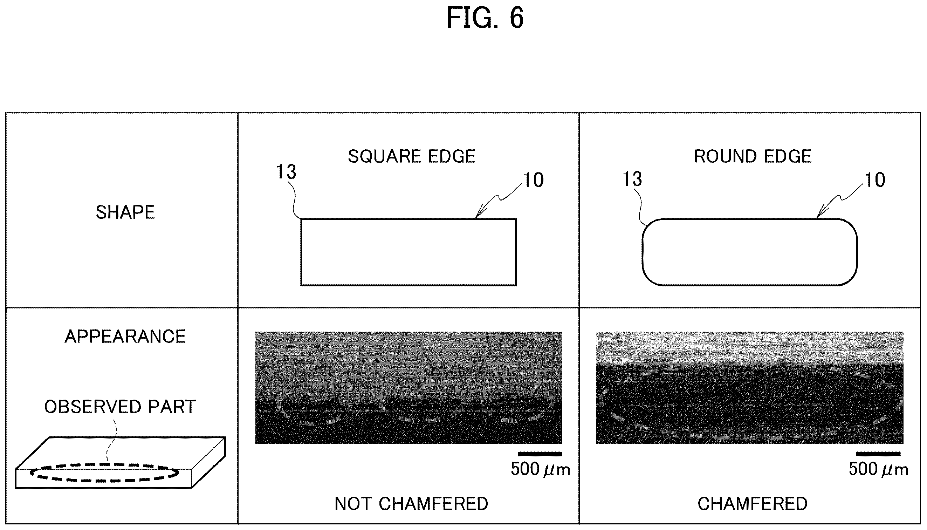

FIG. 6 schematically illustrates the cross-sectional shapes of a square edge in which the corners 13 are not chamfered, and a round edge in which the corners 13 are chamfered for the flat electric conductor 10 of the present embodiment. FIG. 6 also illustrates external photographs of the square edge and the round edge. As illustrated in FIG. 6, the flat electric conductor 10 may be in a state in which the corners 13 are not chamfered and the square edge is substantially right-angled. However, in a case of the square edge, stress may be concentrated in the corners 13 when the flat electric conductor 10 is bent. Therefore, it is preferable that the corners 13 are chamfered, so that the corners 13 are prevented from acting as a starting point of stress concentration. Thus, the round edge with the corners 13 chamfered and curved makes it difficult for the corners 13 to act as a starting point of stress concentration. Therefore, when the flat electric conductor 10 is bent, the occurrence of cracking can be further suppressed.

Next, the manufacturing method of the aluminum alloy bus bar 1 according to the present embodiment will be described. In the manufacturing method of the present embodiment, a cast billet is produced by melting and casting aluminum, magnesium, and silicon to have the above composition. Then, the cast billet is subjected to a homogenization treatment. The homogenization treatment can be performed at 500 to 560 °C for 4 to 10 hours. Alternatively, a cast bar is produced by melting and continuously casting aluminum, magnesium, and silicon to have the above composition, and then the cast bar is rolled to form a wire rod.

Next, the cast billet subjected to the homogenization treatment, or the wire rod obtained as described above, is extruded using an extrusion molding machine to obtain an extruded material having any cross-sectional shape. The extrusion process can be performed by hot extrusion at a temperature of, for example, 350 to 500 °C. The extrusion molding machine is not particularly limited, but for example, a conform extrusion machine can be used.

Extruded materials having any cross-sectional shape can be obtained by using a die (mold) that has been machined to obtain a desired cross-sectional shape during extrusion molding. For example, when the corners 13 of the flat electric conductor 10 are chamfered, an extruded material having chamfered corners can be obtained by making parts corresponding to the corners of the cavity of the die curved surfaces.

Next, the extruded material extruded from the extrusion molding machine is cooled by water, hot water, or cooling oil, or cooled by air cooling. The cooled extruded material is wound to any size. Specifically, the cooled extruded material may be wound to a bobbin in a coil form or may be wound in a hoop form without using a bobbin.

Then, the wound extruded material is subjected to aging heat treatment using a heating furnace. The heating furnace is not particularly limited, but an electric furnace can be used, for example. Here, the condition of the aging heat treatment is such that Mg-Si system acicular particles of the average length and number density mentioned above are formed in the aluminum alloy. Specifically, as the condition of the aging heat treatment, for example, may be a temperature of 225 °C or higher for 2 hours or more, and preferably a temperature of 225 to 300 °C for 2 to 24 hours. However, it is preferable to adjust the heating temperature and time, as appropriate, so that Mg-Si system acicular particles of the predetermined average length and number density are formed.

Thereafter, the aged material subjected to the aging heat treatment is bent to any shape at room temperature. The bending can be performed, for example, by using a forming machine.

By such a process, the aluminum alloy bus bar 1 including the flat electric conductor 10 having at least one bend 12 selected from the group consisting of the edgewise bend 12A, the flatwise bend 12B, and a twist bend formed by adding a twist is obtained.

In the manufacturing method of the aluminum alloy bus bar 1 according to the present embodiment, it is not necessary to perform a solution treatment before an aging heat treatment. That is, the flat electric conductor 10 having the Mg-Si system acicular particles of average length and number density as mentioned above can be obtained by the manufacturing method corresponding to T5 treatment. However, if the flat electric conductor 10 having Mg-Si system acicular particles of average length and number density as mentioned above can be obtained, the solution treatment may be performed before the aging heat treatment.

Moreover, the method of covering the periphery of the central portion of the flat electric conductor 10 with the insulator layer 20 having electrical insulation property is not particularly limited, and the insulator layer 20 can be formed by extrusion coating, for example. For example, after the insulator layer 20 is formed by extrusion coating on the aged material, the bend 12 may be formed by bending.

As described above, the aluminum alloy bus bar 1 according to the first embodiment includes the flat electric conductor 10 made of an aluminum alloy containing 0.35 to 0.8% by mass of magnesium and 0.3 to 0.7% by mass of silicon, with the remainder being aluminum and unavoidable impurities. A plurality of Mg-Si system acicular particles 16 containing magnesium and silicon are dispersed inside the aluminum alloy. An average length of the Mg-Si system acicular particles 16 is 67.1 nm to 378.4 nm, and the number density of the Mg-Si system acicular particles 16 in the aluminum alloy is $4.5 \times 10^{20}/m^3$ to $6.8 \times 10^{21}/m^3$.

The flat electric conductor 10 of the aluminum alloy bus bar 1 is made of an aluminum alloy containing a predetermined amount of magnesium and silicon, and Mg-Si system acicular particles 16 having a predetermined length are dispersed in the aluminum alloy at a predetermined density. The yield stress of the flat electric conductor 10 is enhanced by such a structure, so that the stress relaxation around the hole 11 can be suppressed even when fastened by the fastening member, and the conductivity between the flat electric conductor 10 and the fastening member, and between the flat electric conductor 10 and the other fastened members, can be maintained in a high state. Moreover, the yield stress of the flat electric conductor 10 is increased, and the bending workability is high, due to the high dispersion of the Mg-Si system acicular particles, so that the occurrence of cracking and necking in the bend 12 can be suppressed even when the bend 12 is formed in the flat electric conductor 10.

In the aluminum alloy bus bar 1 according to a second aspect, the allowable bending strain ε of the flat electric conductor 10, which is expressed by Mathematical Formula 1 may exceed 0.27. When the allowable bending strain ε of the flat electric conductor 10 exceeds 0.27, the bending workability of the flat electric conductor 10 is good, so that the occurrence of cracking and necking in the bend 12 can be suppressed even when the edgewise bending is performed.

In the aluminum alloy bus bar 1 according to a third aspect, the flat electric conductor 10 may include at least one bend 12. The flat electric conductor 10 has good bending workability, and at least one bend 12 selected from the group consisting of the edgewise bend 12A, the flatwise bend 12B, and a twist bend can be easily formed in the flat electric conductor 10.

In the aluminum alloy bus bar 1 according to a fourth aspect, the flat electric conductor 10 has the yield stress of 55 to 201 MPa at room temperature measured in accordance with JIS Z2244. The stress relaxation of the flat electric conductor 10 can be suppressed due to the yield stress of the flat electric conductor 10 of 55 MPa or more, so that the electrical connection between the flat electric conductor 10 and the fastening member, and between the flat electric conductor 10 and the other fastened members, can be maintained well. Moreover, due to the yield stress of the flat electric conductor 10 of 201 MPa or less, the decreasing of the bending workability of the flat electric conductor 10 can be suppressed, so that the bend 12 can be easily formed.

The aluminum alloy bus bar 1 according to a fifth aspect, at least the corners 13 of the bend 12 of the flat electric conductor 10 may be chamfered. The corners 13 of the flat electric conductor 10 are chamfered, so that the corners 13 do not easily act as a starting point of stress concentration when the flat electric conductor 10 is bent, and the occurrence of cracking can be further suppressed.

The aluminum alloy bus bar 1 according to a sixth aspect may be used as a routing member of a vehicle. The routing member is routed in the vehicle and electrically connects devices. The aluminum alloy bus bar 1 has good bending workability and electrical connection stability, and can be suitably used, for example, as a conductive member routed inside a battery pack mounted on the vehicle.

EXAMPLES

Hereinafter, the present embodiment will be described in further detail with reference to examples and comparative examples, but the present embodiment is not limited to these examples.

[Preparation of Test samples]

(Example 1)

First, aluminum, silicon, and magnesium were weighed at the ratios illustrated in Table 1. Then, molten metal was prepared by melting the weighed aluminum, silicon, and magnesium, and the molten metal was injected into a mold to obtain an ingot. Then, the ingot was subjected to a homogenization treatment to produce a cast billet. The homogenization treatment was carried out at 540 °C for 4 hours, and a heating rate was 40 °C/h.

Next, the cast billet was extruded hot at 500 °C and then cooled with water to obtain a long flat extruded material. Next, after winding the extruded material, the rolled extruded material was subjected to an aging heat treatment using a heating furnace. The aging heat treatment was carried out at 225 °C for 2 hours. Thus, a long test sample having a plate thickness t of 2.0 mm and a plate width b of 15.0 mm was obtained. In this example, solution treatment was not performed before aging heat treatment.

(Examples 2 to 6)

Test samples of the examples were obtained by the same process as in Example 1 except that the temperature and time of the aging heat treatment for the extruded material were changed as illustrated in Table 1.

(Examples 7 to 12)

Test samples of the examples were obtained in the same process as in Example 1 except that the proportions of elements were changed as illustrated in Table 1, and the temperature and time of the aging heat treatment for the extruded material were changed as illustrated in Table 1. However, in Example 7, the die was adjusted so that the plate thickness t of the test sample was 5.0 mm and the plate width b was 24.0 mm.

(Comparative Examples 1 and 4 to 7)

Test samples of the examples were obtained in the same process as in Example 1 except that the proportions of elements were changed as illustrated in Table 1, and the temperature and time of the aging heat treatment for the extruded material were changed as illustrated in Table 1.

(Comparative Example 2)

First, aluminum, silicon, and magnesium were weighed in the proportions illustrated in Table 1, and then extruded material was obtained in the same process as in Example 1. After winding the extruded material, solution treatment was performed on the wound extruded material using a heating furnace. The solution treatment was performed at 540 °C for 2 hours. After the solution treatment, aging heat treatment was performed using a heating furnace. The aging heat treatment was performed at 225 °C for 8 hours. Thus, the test sample of this example was obtained. The manufacturing method of Comparative Example 2 corresponds to T6 treatment.

(Comparative Example 3)

The test sample of this example was obtained by the same process as Comparative Example 2 except that the aging heat treatment time was changed as illustrated in Table 1.

[Table 1]

| | Alloy | Alloy Composition (% by mass) | | | | | | | | | | Solution Treatment | | Aging Treatment | |
|---|---|---|---|---|---|---|---|---|---|---|---|---|---|---|---|
| | | Si | Fe | Mg | Cu | Mn | Cr | Zn | B | Others | Al | Temperature (°C) | Time (h) | Temperature (°C) | Time (h) |
| Example 1 | A | 0.38 | 0.01 | 0.60 | 0.03 | 0.00 | 0.00 | 0.02 | 0.00 | ≦0.1 | bal. | - | - | 225 | 2 |
| Example 2 | A | 0.38 | 0.01 | 0.60 | 0.03 | 0.00 | 0.00 | 0.02 | 0.00 | ≦0.1 | bal. | - | - | 225 | 4 |
| Example 3 | A | 0.38 | 0.01 | 0.60 | 0.03 | 0.00 | 0.00 | 0.02 | 0.00 | ≦0.1 | bal. | - | - | 225 | 16 |
| Example 4 | A | 0.38 | 0.01 | 0.60 | 0.03 | 0.00 | 0.00 | 0.02 | 0.00 | ≦0.1 | bal. | - | - | 275 | 2 |
| Example 5 | A | 0.38 | 0.01 | 0.60 | 0.03 | 0.00 | 0.00 | 0.02 | 0.00 | ≦0.1 | bal. | - | - | 275 | 4 |
| Example 6 | A | 0.38 | 0.01 | 0.60 | 0.03 | 0.00 | 0.00 | 0.02 | 0.00 | ≦0.1 | bal. | - | - | 275 | 8 |
| Example 7 | B | 0.40 | 0.09 | 0.40 | 0.00 | 0.00 | 0.00 | 0.01 | 0.01 | ≦0.1 | bal. | - | - | 230 | 5 |
| Example 8 | C | 0.45 | 0.30 | 0.55 | 0.05 | 0.00 | 0.01 | 0.05 | 0.00 | ≦0.1 | bal. | - | - | 250 | 24 |
| Example 9 | D | 0.30 | 0.30 | 0.35 | 0.05 | 0.00 | 0.01 | 0.05 | 0.00 | ≦0.1 | bal. | - | - | 250 | 24 |
| Example 10 | E | 0.30 | 0.30 | 0.80 | 0.05 | 0.00 | 0.01 | 0.05 | 0.00 | ≦0.1 | bal. | - | - | 300 | 9 |
| Example 11 | F | 0.70 | 0.30 | 0.35 | 0.05 | 0.00 | 0.01 | 0.05 | 0.00 | ≦0.1 | bal. | - | - | 250 | 24 |
| Example 12 | G | 0.70 | 0.30 | 0.80 | 0.05 | 0.00 | 0.01 | 0.05 | 0.00 | ≦0.1 | bal. | - | - | 300 | 24 |
| Comparative Example 1 | A | 0.38 | 0.01 | 0.60 | 0.03 | 0.00 | 0.00 | 0.02 | 0.00 | ≦0.1 | bal. | - | - | 225 | 8 |
| Comparative Example 2 | A | 0.38 | 0.01 | 0.60 | 0.03 | 0.00 | 0.00 | 0.02 | 0.00 | ≦0.1 | bal. | 540 | 2 | 225 | 8 |
| Comparative Example 3 | A | 0.38 | 0.01 | 0.60 | 0.03 | 0.00 | 0.00 | 0.02 | 0.00 | ≦0.1 | bal. | 540 | 2 | 225 | 16 |
| Comparative Example 4 | C | 0.45 | 0.30 | 0.55 | 0.05 | 0.00 | 0.01 | 0.05 | 0.00 | ≦0.1 | bal. | - | - | 250 | 16 |
| Comparative Example 5 | E | 0.30 | 0.30 | 0.80 | 0.05 | 0.00 | 0.01 | 0.05 | 0.00 | ≦0.1 | bal. | - | - | 250 | 16 |
| Comparative Example 6 | F | 0.70 | 0.30 | 0.35 | 0.05 | 0.00 | 0.01 | 0.05 | 0.00 | ≦0.1 | bal. | - | - | 250 | 9 |
| Comparative Example 7 | G | 0.70 | 0.30 | 0.80 | 0.05 | 0.00 | 0.01 | 0.05 | 0.00 | ≦0.1 | bal. | - | - | 200 | 24 |

[Evaluation of Test samples]

(Mechanical Properties)

The hardness, yield stress and n-value at room temperature were measured for each test sample. The hardness was measured according to JIS Z2244 (Vickers hardness test), and the yield stress and n-value were measured according to JIS Z2241 (Metallic materials - Tensile testing - Method of test at room temperature). The measurement results of the test samples are summarized in Table 2.

(Conductivity)

The conductivity of the test samples were measured according to JIS H0505 (Measuring methods for electrical resistivity and conductivity of non-ferrous materials). The measurement results of the test samples are summarized in Table 2.

(Mg-Si system precipitates)

The average length and number density of precipitates were measured by observing the test samples in the examples with a transmission electron microscope. Specifically, test pieces with a diameter of about 3 mm and a thickness of 100 $\mu$m or less were prepared from the test samples in the examples, and then made thinner using a twin-jet electropolishing device. The thinned test samples were then observed with a transmission electron microscope.

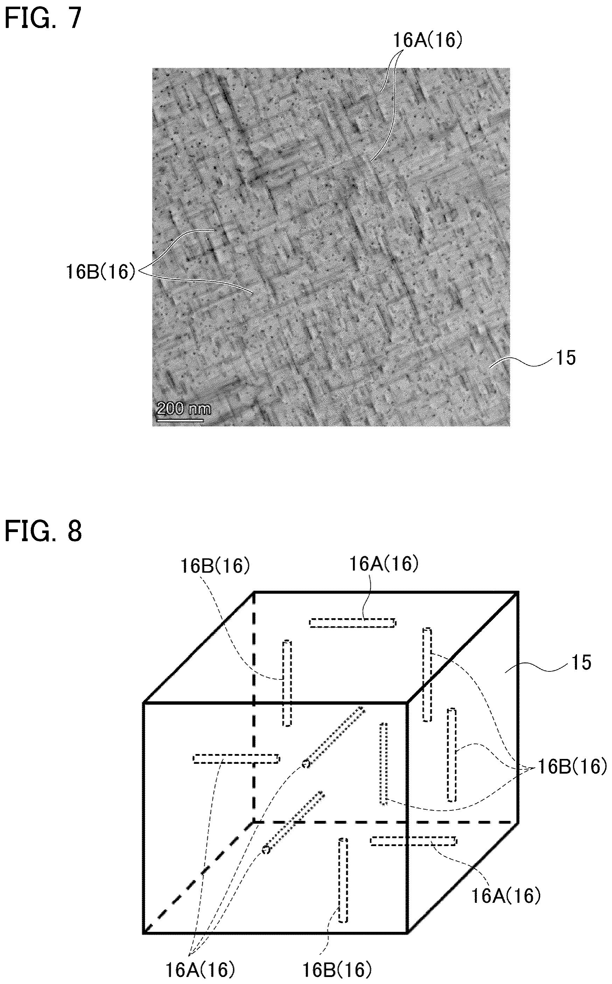

FIG. 7 illustrates the result of observing the test sample prepared from the test sample in Example 1 at a magnification of 200,000. As illustrated in FIG. 7, in Example 1, a plurality of the acicular particles 16 are dispersed in an aluminum matrix 15. Then, the length of acicular particles 16A was obtained from the longest distance between two different points on the contour of the acicular particles 16A, and the average length was obtained from the lengths of the plurality of acicular particles 16A.
The acicular particles 16A are arranged on the paper surface of FIG. 7, so they are observed as acicular precipitates in FIG. 7. However, acicular particles 16B are observed not as acicular, but as point precipitates in FIG. 7 due to their long axes crossing the paper surface of FIG. 7. That is, for example, as illustrated in FIG. 8, when acicular particles 16B are arranged almost perpendicular to acicular particles 16A, acicular particles 16B are observed as point precipitates in FIG. 7. Therefore, the number density of precipitates was obtained by counting the number of acicular particles 16A and 16B in the observation field to obtain the areal density and then multiplying the areal density by the thickness of the test pieces. The average length and number density of precipitates in the test samples are summarized in Table 2.

(Bending Workability)

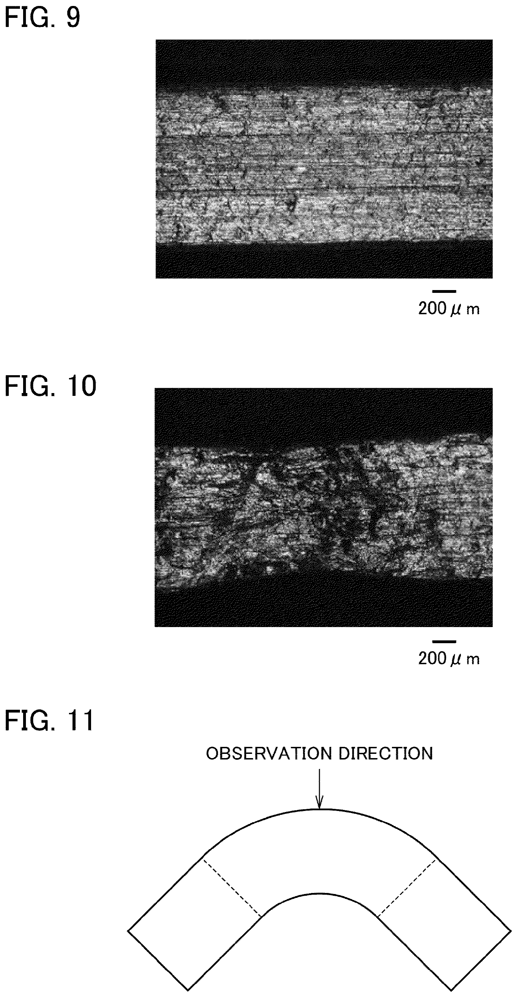

The minimum bending radius $R_{min}$ in each test sample was measured. The minimum bending radius $R_{min}$ was determined as the smallest bending radius R when macroscopic defects such as cracking or necking did not occur after edgewise bending was performed at room temperature, and bending was observed with an optical microscope. Therefore, when a defect such as cracking or necking occurred, the bending radius at that point was not set to the minimum bending radius $R_{min}$ even though the bend did not break.
Here, FIGS. 9 and 10 illustrate examples of the results of observing a bend formed by edgewise bending with an optical microscope at 50 magnifications. FIGS. 9 and 10 illustrate the results of observing an outer curved surface (outer R part) of the bend as illustrated in FIG. 11. FIG. 9 illustrates a case where no cracking or necking is observed in the outer curved surface of the bend. However, FIG. 10 illustrates a case where cracking or necking is observed in the outer curved surface of the bend. As illustrated in FIG. 9, the smallest bending radius R when macroscopic defects such as cracking or necking do not occur in the bend is set as the minimum bending radius $R_{min}$.
For each test sample, the hardness of the bend was measured at room temperature with the minimum bending radius illustrated in Table 2 in accordance with JIS Z2244. Then, the hardness ratio was obtained from the hardness of the bend after bending relative to the hardness of the bend before bending ([hardness of the bend after bending] / [hardness of the bend before bending]). Furthermore, the allowable bending strain $\varepsilon$ was obtained from the plate width (mm) of the test samples and the minimum bending radius $R_{min}$ (mm) when the test samples with the plate width was bent edgewise at room temperature according to Mathematical Formula 1. The hardness ratio and allowable bending strain $\varepsilon$ of each test sample are summarized in Table 2.
Next, when the test samples of the examples were bent edgewise so that the bending radius was 30 mm, it was observed whether defects occurred in the bend. Specifically, after the test samples of the examples were bent edgewise at room temperature so that the bending radius was 30 mm, the outer curved surface (outer R part) of the bend was observed as illustrated in Fig. 11. Then, as illustrated in Fig. 9, when macroscopic defects such as cracking and necking did not occur on the outer curved surface of the bend, the result was determined to be "Yes". However, as illustrated in Fig. 10, when cracking or necking was observed in the outer curved surface of the bend, the result was determined to be "No". The results of the test samples are summarized in Table 2.

[Table 2]

| | Mechanical Properties | | | Conductivity (% IACS) | Mg-Si Precipitates | | Bending | | | | |
|---|---|---|---|---|---|---|---|---|---|---|---|
| | Hardness (Hv) | Yield Stress (MPa) | n Value | | Average Length (nm) | Density (/m$^3$) | Minimum Bend $R_{min}$ (mm) | Bend Hardness (Hv) | Hardness Ratio | Allowable Bend Strain | R30 Bending Possiblity |
| Example 1 | 68 | 152 | 0.12 | 55.0 | 74.0 | $6.8\times10^{21}$ | 14 | 78 | 1.1 | 0.52 | Yes |
| Example 2 | 73 | 196 | 0.07 | 56.7 | 67.1 | $6.7\times10^{21}$ | 30 | 79 | 1.1 | 0.30 | Yes |
| Example 3 | 72 | 201 | 0.07 | 58.2 | 114.9 | $2.9\times10^{21}$ | 25 | 73 | 1.0 | 0.34 | Yes |
| Example 4 | 48 | 135 | 0.15 | 59.2 | 291.3 | $9.1\times10^{20}$ | 20 | 51 | 1.1 | 0.40 | Yes |
| Example 5 | 45 | 121 | 0.17 | 59.8 | 360.4 | $5.7\times10^{20}$ | 25 | 57 | 1.3 | 0.34 | Yes |
| Example 6 | 41 | 106 | 0.20 | 60.5 | 378.4 | $4.5\times10^{20}$ | 30 | 51 | 1.2 | 0.30 | Yes |
| Example 7 | 54 | 135 | 0.12 | 59.6 | 101.4 | $1.7\times10^{21}$ | 16 | 55 | 1.0 | 0.63 | Yes |
| Example 8 | 69 | 184 | 0.09 | 58.5 | 89.4 | $5.0\times10^{21}$ | 20 | 73 | 1.1 | 0.40 | Yes |
| Example 9 | 66 | 176 | 0.10 | 58.7 | 76.3 | $2.8\times10^{21}$ | 17 | 70 | 1.1 | 0.45 | Yes |
| Example 10 | 42 | 110 | 0.17 | 57.7 | 373.1 | $5.3\times10^{20}$ | 29 | 52 | 1.2 | 0.30 | Yes |
| Example 11 | 67 | 179 | 0.10 | 57.2 | 96.3 | $4.1\times10^{21}$ | 18 | 71 | 1.1 | 0.43 | Yes |
| Example 12 | 45 | 118 | 0.16 | 58.9 | 316.6 | $6.7\times10^{20}$ | 25 | 54 | 1.2 | 0.34 | Yes |
| Comparative Example 1 | 77 | 218 | 0.06 | 57.3 | 46.2 | $1.0\times10^{22}$ | 40 | 80 | 1.0 | 0.23 | No |
| Comparative Example 2 | 77 | 225 | 0.04 | 57.7 | 37.6 | $1.6\times10^{22}$ | 49 | 79 | 1.0 | 0.20 | No |
| Comparative Example 3 | 72 | 197 | 0.06 | 58.2 | 65.8 | $7.0\times10^{21}$ | 33 | 74 | 1.0 | 0.27 | No |
| Comparative Example 4 | 83 | 222 | 0.06 | 57.2 | 41.7 | $1.6\times10^{22}$ | 43 | 84 | 1.0 | 0.22 | No |
| Comparative Example 5 | 81 | 217 | 0.06 | 56.5 | 64.4 | $1.3\times10^{22}$ | 39 | 82 | 1.0 | 0.24 | No |
| Comparative Example 6 | 84 | 225 | 0.06 | 55.4 | 38.0 | $1.6\times10^{22}$ | 45 | 84 | 1.0 | 0.21 | No |
| Comparative Example 7 | 83 | 222 | 0.06 | 55.7 | 39.6 | $1.5\times10^{22}$ | 43 | 84 | 1.0 | 0.22 | No |

As illustrated in Table 2, in the test sample of Example 1 to 12, the average length of Mg-Si system precipitates was 67.1 nm to 378.4 nm, and the number density of Mg-Si system precipitates was $4.5 \times 10^{20}$/m$^3$ to $6.8 \times 10^{21}$/m$^3$. In contrast, in the test samples of Comparative Examples 1 to 7, the average length of Mg-Si system precipitates was less than 67.1 nm, and the number density of Mg-Si system precipitates was more than $6.8 \times 10^{21}$/m$^3$. The yield stress of the test samples of Examples 1 to 12 were 100 to 201 MPa, but the yield stress of the test samples of Comparative Examples 1 to 7 was more than 201 MPa, except for Comparative Example 3. As a result, the minimum bending radius $R_{min}$ of the test samples of Examples 1 to 12 was 30 mm or less, while the minimum bending radius $R_{min}$ of the test samples of Comparative Example 1 to 7 was 33 mm or more.

As described above, when the average length and number density of Mg-Si system precipitates are within the above range, the bending workability and the stability of electrical connection are improved because the generation of defects in the bending portion can be suppressed while the yield stress of the aluminum alloy is increased.

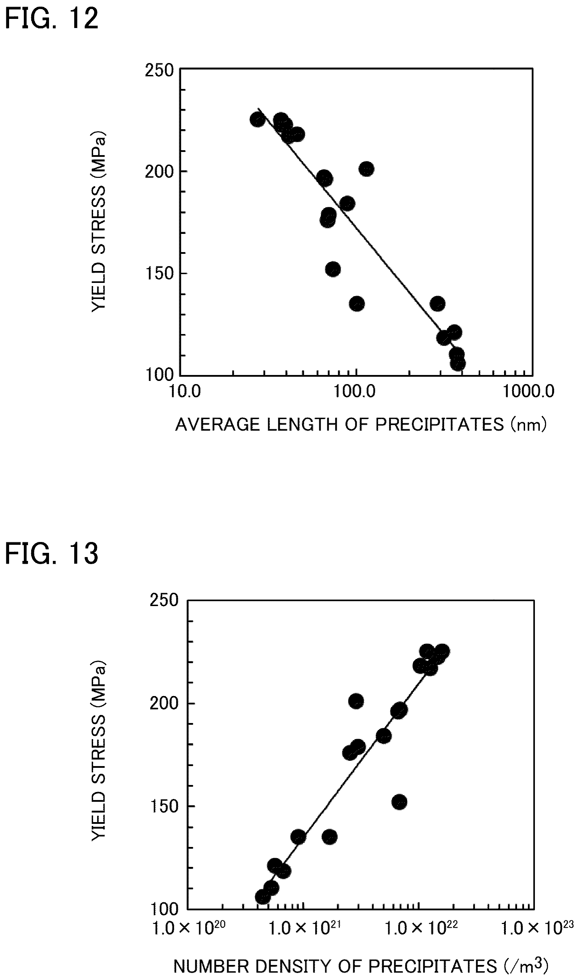

Here, Fig. 12 illustrates the relationship between the average length of precipitates and the yield stress in the test samples of Examples 1 to 12 and Comparative Examples 1 to 7. Furthermore, Fig. 13 illustrates the relationship between the number density of precipitates and the yield stress in the test samples of Examples 1 to 12 and Comparative Examples 1 to 7. As illustrated in Fig. 12, it can be seen that the yield stress tends to decrease as the average length of precipitates increases. As illustrated in Fig. 13, it can be seen that the yield stress tends to increase as the number density of precipitates increases. Therefore, it can be understood that an aluminum alloy with desired yield stress can be obtained by adjusting the average length and number density of Mg-Si system precipitates.

Moreover, as illustrated in Table 2, the n value of the test samples of Examples 1 to 12 was 0.07 or more, while the n value of the test samples of Comparative Examples 1 to 7 was 0.06 or less. In addition, the hardness ratio ([hardness of bend after bending] / [hardness of bend before bending]) was 1.0 or more for the test samples of Examples 1 to 12, and 1.1 or more for all the samples except for Example 7. Therefore, it can be understood that the strength degradation of the bend 12 can be suppressed when the average length and number density of Mg-Si system precipitates are within the range above.

Furthermore, as illustrated in Table 2, the allowable bending strain of the test samples of Examples 1 to 12 exceeded 0.27, and was 0.30 or more, while the allowable bending strain of the test samples of Comparative Examples 1 to 7 was 0.27 or less. Therefore, it can be understood that when the allowable bending strain exceeds 0.27, the bending workability of the aluminum alloy is improved, and the occurrence of defects in the bend can be suppressed.

Although the present embodiments have been described above, the present embodiments are not limited to these embodiments, and various modifications can be made within the scope of the gist of the present embodiments.

The entire contents of Japanese Patent Application No. 2023-039057 (Application Date: March 13, 2023) are incorporated herein by reference.

REFERENCE SIGNS LIST

1       Aluminum alloy bus bar
10     Flat electric conductor
12     Bend
16     Mg-Si system acicular particle

**Claims**

1.  An aluminum alloy bus bar comprising:

    a flat electric conductor made of an aluminum alloy containing 0.35 to 0.8% by mass of magnesium and 0.3 to 0.7% by mass of silicon, with a remainder consisting of aluminum and unavoidable impurities; wherein
    a plurality of Mg-Si system acicular particles containing magnesium and silicon are dispersed in the aluminum alloy; and
    an average length of the Mg-Si system acicular particles is 67.1 nm to 378.4 nm, and the number density of the Mg-Si system acicular particles in the aluminum alloy is $4.5 \times 10^{20}$/m$^3$ to $6.8 \times 10^{21}$/m$^3$.

2.  The aluminum alloy bus bar according to claim 1, wherein an allowable bending strain $\varepsilon$ of the flat electric conductor, which is expressed by Mathematical Formula 1 below, exceeds 0.27.

[Math. 1]

$$\varepsilon = \frac{1.48b}{2R_{min} + b}$$

(b is a plate width (mm) of the flat electric conductor, and $R_{min}$ is a minimum bending radius (mm) when the flat electric conductor of the plate width is bent edgewise.)

3. The aluminum alloy bus bar according to claim 1 or 2, wherein the flat electric conductor includes at least one bend.

4. The aluminum alloy bus bar according to any one of claims 1 to 3, wherein the flat electric conductor has a yield stress of 55 to 201 MPa at room temperature measured in accordance with JIS Z2244.

5. The aluminum alloy bus bar according to claim 3, wherein at least corners of the bend of the flat electric conductor are chamfered.

6. The aluminum alloy bus bar according to any one of claims 1 to 5, wherein the flat electric conductor is used as a routing member of a vehicle.

# FIG. 1

FIG. 2

FIG. 3

## FIG. 4

## FIG. 5

# FIG. 6

| | SQUARE EDGE | ROUND EDGE |
|---|---|---|
| SHAPE | | |
| APPEARANCE<br><br>OBSERVED PART<br> | <br>500 μm<br>NOT CHAMFERED | <br>500 μm<br>CHAMFERED |

## FIG. 7

## FIG. 8

FIG. 9

200 μ m

FIG. 10

200 μ m

FIG. 11

OBSERVATION DIRECTION

FIG. 12

FIG. 13

## INTERNATIONAL SEARCH REPORT

| International application No. |
|---|
| **PCT/JP2024/004579** |

**A. CLASSIFICATION OF SUBJECT MATTER**

*C22C 21/00*(2006.01)i; *C22C 21/02*(2006.01)i; *C22C 21/06*(2006.01)i; *C22F 1/00*(2006.01)i; *C22F 1/04*(2006.01)i;
*H01M 50/503*(2021.01)i; *H01M 50/522*(2021.01)i
FI:  C22C21/00 A; C22C21/02; C22C21/06; C22F1/00 602; C22F1/00 612; C22F1/00 623; C22F1/00 624; C22F1/00 625;
C22F1/00 627; C22F1/00 630A; C22F1/00 630C; C22F1/00 630F; C22F1/00 630K; C22F1/00 661A; C22F1/00 682;
C22F1/00 683; C22F1/00 684C; C22F1/00 685Z; C22F1/00 691B; C22F1/00 691C; C22F1/00 692A; C22F1/00 694A;
C22F1/00 694B; C22F1/04 H; H01M50/503; H01M50/522

According to International Patent Classification (IPC) or to both national classification and IPC

**B. FIELDS SEARCHED**

Minimum documentation searched (classification system followed by classification symbols)
C22C21/00; C22C21/02; C22C21/06; C22F1/00; C22F1/04; H01M50/503; H01M50/522

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-79475 A (SHOWA DENKO K.K.) 16 May 2016 (2016-05-16)<br>entire text | 1-6 |
| A | JP 2017-110245 A (KABUSHIKI KAISHA KOBE SEIKO SHO) 22 June 2017 (2017-06-22)<br>entire text | 1-6 |
| A | JP 2021-533260 A (TESLA, INC.) 02 December 2021 (2021-12-02)<br>entire text | 1-6 |
| A | JP 9-67659 A (YKK CORP.) 11 March 1997 (1997-03-11)<br>entire text | 1-6 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **16 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/004579**

| Patent document cited in search report | | | Publication date (day/month/year) | Patent family member(s) | | | Publication date (day/month/year) |
|---|---|---|---|---|---|---|---|
| JP | 2016-79475 | A | 16 May 2016 | (Family: none) | | | |
| JP | 2017-110245 | A | 22 June 2017 | US | 2017/0167001 | A1 | |
| | | | | entire text | | | |
| | | | | EP | 3187604 | A1 | |
| | | | | CN | 106893900 | A | |
| JP | 2021-533260 | A | 02 December 2021 | US | 2021/0332461 | A1 | |
| | | | | entire text | | | |
| | | | | WO | 2020/028730 | A1 | |
| | | | | EP | 3830307 | A1 | |
| | | | | CN | 112567059 | A | |
| | | | | KR | 10-2021-0038624 | A | |
| JP | 9-67659 | A | 11 March 1997 | (Family: none) | | | |

Form PCT/ISA/210 (patent family annex) (July 2022)

**EP 4 682 277 A1**

**Patent documents cited in the description**

- JP 2018206663 A
- JP 2023039057 A